# EUROPEAN PATENT SPECIFICATION

(11) **EP 1 800 979 B1**
(45) Date of publication and mention of the grant of the patent: **21.08.2013**
(21) Application number: 06126477.6
(22) Date of filing: 19.12.2006
(51) Int. Cl.: B60T 7/06

(54) **Pedal support for the cab of a lorry**
Pedalträger für Kabine eines Lasters
Structure de support pour une pédale pour une cabine de camion

(30) Priority: 23.12.2005 DE 102005062390
(43) Date of publication of application: 27.06.2007
(73) Proprietor: IVECO MAGIRUS AG, 89079 Ulm (DE)
(72) Inventor: Distelrath, Heinz-Peter c/o IVECO MAGIRUS AG, 89079 Ulm (DE); Pohl, Harald, 89155 Erbach (DE); Mayer, Simon, 89129 Langenau (DE)
(74) Representative: Borsano, Corrado

(56) References cited:
- DE-A1- 10 105 266
- FR-A- 2 787 211
- US-A- 4 896 736
- US-B1- 6 591 927

## Description

This invention refers to a pedal support for the cab of a lorry, with mounting positions for a brake pedal and at least part of the brake and/or clutch control elements, in particular for a service brake valve and the connections of its pneumatic pipes.

In general, the front part of modern lorry cabs is substantially vertical. In the lower region of this front part there is very often a separately extractable support which has a support position for the brake pedal, and possibly also for a clutch pedal, as well as mounting positions for brake control elements, such as the service brake valve for example. Parts of the clutch system can also be located here, for example, a clutch supply cylinder together with a flexible hydraulic pipe connection. In the case of these pedal support devices, the service brake valve and/or clutch supply cylinder are often mounted in such a way that they can be controlled with the aid of the brake pedal and/or clutch pedal supported on the inner side of the cab; on the other hand, however, they are located on the outer side i.e. the front side of the pedal support in the direction of travel.

The prior art document US 4, 896, 736 discloses a typical foot valve and brake pedal assembly particularly for a truck - the pedal assembly is suitable to be easily removed when the nose hood is in its opened position.

In this position, in the event of a crash or collision involving the front part of the lorry, the service brake valve and, in particular, its pneumatic connection pipes can be damaged to the point that braking capacity is lost. In the case of damage to the corresponding clutch elements, the capacity to engage or change gear is probably lost and therefore also the possibility of being able to steer the vehicle in a controlled manner from the place of an accident, where there is perhaps a fire hazard. In the case of so-called motorway pile-ups involving a number of vehicles, multiple vehicle crashes frequently occur, for which the possibility exists that in the case of a lorry, the front region becomes damaged before the lorry has come to a complete stop. In cases of the said damage, because of the exposed position of the brake control members on the front part of the vehicle, the braking system can be destroyed to the point that it is no longer possible to brake. On the other hand, in the case of damage to clutch members, the possibility of moving the vehicle from the immediate vicinity of the place of the accident can be lost. It is clearly evident that in this way, very dangerous situations can arise.

The objective of the invention is therefore that of improving a pedal support of the said type such that the brake and/or clutch control elements mounted on the pedal support are better protected against damage.

In order to achieve this objective, the pedal support according to the invention is characterised in that protective walls are provided that project in the direction of travel on the front side in the direction of travel.

These protective walls keep hard objects, which draw near to the pedal support in the case of an imminent collision, away from the pedal support so that the delicate control elements of the brake are preserved from collision and therefore from damage under the protection of the projecting protective walls.

In order to avoid misunderstandings, it is wished to make known that this patent application refers to a pedal support that is positioned behind a removable sheet-metal cover in the front part of a lorry. However, this sheet-metal cover is relatively soft and does not offer sufficient protection in the case of collision.

The pedal support, preferably on the inner side, which faces toward the inside of the cab, has ribbing that stiffens the pedal support as a whole.

The protective walls are preferably made in one piece with the pedal support. The protective walls, in turn, have ribbing and grooves for further stiffening.

The pedal support can be a forged or cast part.

In the following, preferred examples of embodiment of the invention are explained in greater detail with reference to the appended drawing.

Figure 1 is a perspective representation of a pedal support in accordance with the invention, from a left-hand diagonal perspective of the inner side or rear side,

Figure 2 shows a similar view of the rear side from a right-hand diagonal perspective,

Figure 3 is a perspective representation with the front side seen diagonally from the left, and

Figure 4 is a perspective representation corresponding to the front side seen diagonally from the right.

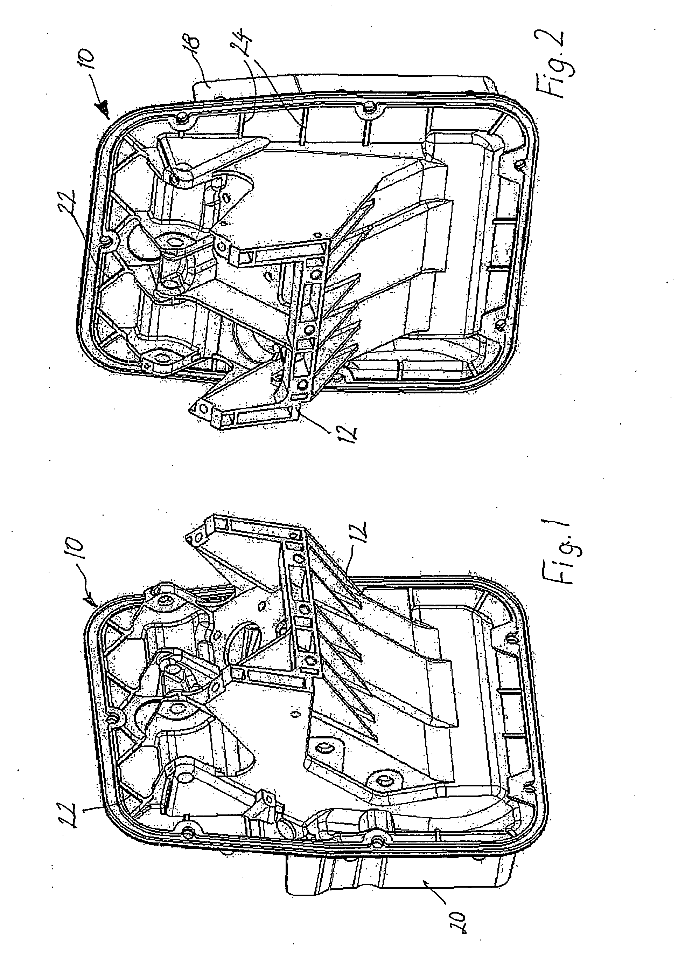

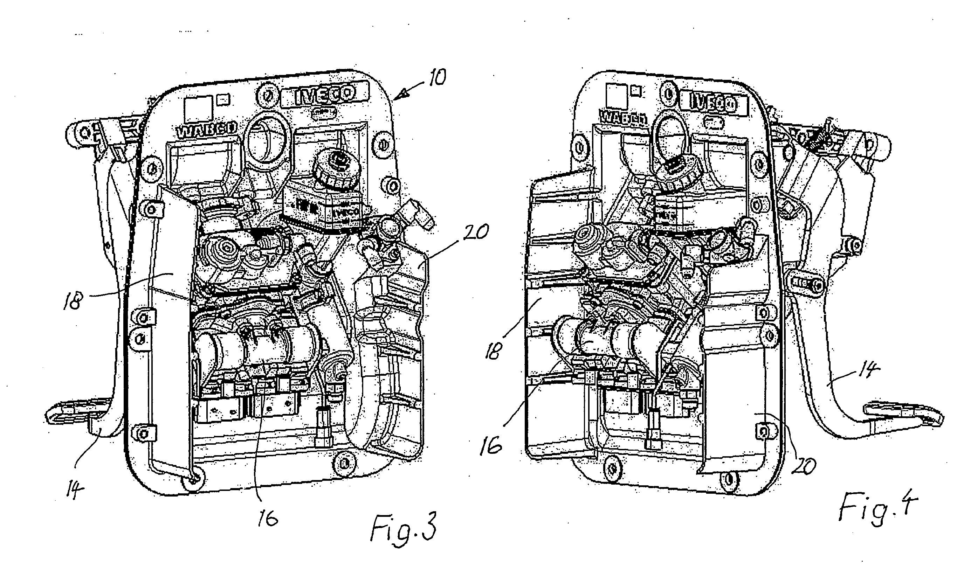

In the drawing, a pedal support in accordance with the invention is defined by reference 10. It possesses a substantially rectangular or slightly trapezoidal outline with rounded corners. As can be seen in Figures 1 and 2, on the rear side there is an attachment 12 shaped like a console, facing diagonally upwards, for which there is a corresponding cavity on the front side, as shown in Figures 3 and 4. As can be seen in Figures 3 and 4, the attachment 12 serves, amongst other things, to support the brake pedal 14, which has been omitted in Figures 1 and 2, but is shown in outline in Figures 3 and 4. The control elements of a compressed-air brake, for example a service brake valve 16, are arranged in the recessed cavity formed on the front side. A number of pneumatic connections, partially omitted from the drawing, emanate from the service brake valve 16. In the case of a more violent collision, these pneumatic connections especially can be damaged such that they no longer function. In the embodiment depicted, the clutch elements are not shown. They are installed elsewhere.

The previously described details are, as such, known.

Specific characteristics of the invention in question are the lateral protective walls 18 and 20 on the two lateral edges of the pedal support 10 in Figures 3 and 4. The protective walls 18 and 20 project perpendicularly to the front surface of the pedal support 10 and extend beyond the various control elements mounted on the pedal support so as to be able to keep a harder impact object away from the pedal support. In this way, the delicate control elements of the brake can be protected in the case of frontal collisions.

Although Figures 1 and 2 are representations viewed from the inner side, they do allow the protective walls 18 and 20 placed on the outer side to be partially identified by virtue of the perspective representation.

As can be identified in Figures 1 and 2, on the inner side of the pedal support 10 facing the inside of the cab, there are a number of stiffening ribs 22 that contribute to the stiffening of the pedal support as a whole and therefore, in turn, serve to protect the functional parts mounted on the pedal support.

The front plate according to the invention has a series of holes in its peripheral zone that serve to accept screws for fixing it inside the front part of the vehicle. These details, however, are of known art and do not form the subject of the invention.

The protective walls 18 and 20 on the two lateral edges of the pedal support 10 are shown in the drawing with a different lengths. The length is based, in particular, on the local space conditions and can incidentally also be made dependent on the position of the parts to be specially protected.

## Claims

1. Pedal support for the cab of a lorry, with mounting positions for a brake pedal (14) and at least part of the control elements (16) of the brake and/or clutch, in particular for a service brake valve and the respective pneumatic pipe connections, comprising protective walls (18 and 20) projecting in the direction of travel on the front side in the direction of travel, **characterized in that** said protective walls (18, 20) project further in the direction perpendicular to the surface of the plane than the brake control elements mounted on the pedal support.

2. Pedal support in accordance with claim 1, **characterised in that** the pedal support (10) is provided with ribbing (22 and 24) on the rear side in the direction of travel for stiffening the pedal support.

3. Pedal support in accordance with claim 1 or 2, **characterised in that** the protective walls (18 and 20) projecting on the front side of the pedal support (10), are provided along the lateral edges, which extend substantially perpendicularly in the pedal support's mounted position.

## Patentansprüche

1. Pedalträger für die Kabine eines Lastkraftwagens mit Montagepositionen für ein Bremspedal (14) und zumindest einen Teil der Steuerelemente (16) der Bremse und/oder Kupplung, insbesondere für ein Betriebsbremsenventil und die jeweiligen pneumatischen Rohranschlüsse, umfassend Schutzwände (18 und 20), die in der Bewegungsrichtung an der Frontseite in der Bewegungsrichtung vorstehen, **dadurch gekennzeichnet, dass**
die Schutzwände (18, 20) in der Richtung senkrecht zu der Oberfläche der Ebene weiter hinaus vorstehen als die an dem Pedalträger montierten Bremsensteuerelemente.

2. Pedalträger nach Anspruch 1,
**dadurch gekennzeichnet, dass** der Pedalträger (10) an der Rückseite in der Bewegungsrichtung mit einer Rippung (22 und 24) zum Versteifen des Pedalträgers versehen ist.

3. Pedalträger nach Anspruch 1 oder 2,
**dadurch gekennzeichnet, dass** die Schutzwände (18 und 20), die an der Frontseite des Pedalträgers (10) vorstehen, entlang der Seitenkanten vorgesehen sind, welche sich in der montierten Position des Pedalträgers im Wesentlichen senkrecht erstrecken.

## Revendications

1. Support de pédale pour la cabine d'un camion, avec des positions de montage pour une pédale de frein (14) et au moins une partie des éléments de commande (16) du frein et/ou de l'embrayage, en particulier pour un clapet de frein de service et les raccordements de tuyaux pneumatiques respectifs, comprenant des parois de protection (18 et 20) faisant saillie dans la direction de déplacement sur le côté avant dans la direction de déplacement, **caractérisé en ce que** lesdites parois de protection (18, 20) font plus saillie dans la direction perpendiculaire à la surface du plan que les éléments de commande de frein montés sur le support de pédale.

2. Support de pédale selon la revendication 1, **caractérisé en ce que** le support de pédale (10) est pourvu de nervurage (22 et 24) sur le côté arrière dans la direction de déplacement pour renforcer le support de pédale.

3. Support de pédale selon la revendication 1 ou 2, **caractérisé en ce que** les parois de protection (18 et 20) faisant saillie sur le côté avant du support de pédale (10) sont prévues le long des bords latéraux, qui s'étendent de façon sensiblement perpendiculaire dans la position montée du support de pédale.
